# EUROPÄISCHE PATENTSCHRIFT

(11) **EP 0 373 477 B1**
(45) Veröffentlichungstag und Bekanntmachung des Hinweises auf die Patenterteilung: **01.12.1993**
(21) Anmeldenummer: 89122362.0
(22) Anmeldetag: 05.12.1989
(51) Int. Cl.: H02G 15/10, H02G 15/192

(54) **Längsgeteilte Luftmuffe in Leichtbauweise**
Light construction longitudinally divided overhead sleeve
Manchon aérien divisé longitudinalement en mode de construction légère

(30) Priorität: 16.12.1988 DE 3842518
(43) Veröffentlichungstag der Anmeldung: 20.06.1990
(73) Patentinhaber: RXS Schrumpftechnik-Garnituren GmbH, D-58093 Hagen (DE)
(72) Erfinder: Schilling, Werner, Dipl.-Ing., D-8632 Neustadt (DE)
(74) Vertreter: Fuchs, Franz-Josef, Dr.-Ing.

(56) Entgegenhaltungen:
- EP-A- 0 057 582
- EP-A- 0 226 940
- EP-A- 0 249 972
- DE-A- 2 011 297
- FR-A- 2 312 130
- US-A- 4 486 620
- US-A- 4 721 830

## Beschreibung

Die Erfindung betrifft eine Luftmuffe, bestehend aus einem Muffenrohr und zwei stirnseitigen Einführungsbereichen und aus Hängevorrichtungen zum Anhängen an ein Tragseil, wobei die Längsränder in längsverlaufenden Verschlußprofilen einer Trageschiene dichtend gefaßt sind, diese Trageschiene als formstabiles Trageelement zur Aufnahme des Gewichts der Muffen- und Spleißteile ausgebildet ist, und die Hängevorrichtung zum Anhängen an das Tragseil an der Trageschiene angeordnet ist.

Aus der US-PS 4.084.067 ist beispielsweise eine derartige Luftmuffe bekannt. Daraus wird ersichtlich, daß das Muffengehäuse, wie bei vielen anderen Ausführungsformen, als tragender Muffenkörper ausgebildet ist, der entsprechend schwer und versteift sein muß um die geforderten mechanischen Eigenschaften erfüllen zu können.

Aus der US-A- 4,721,830 ist eine Luftmuffe bekannt, die aus zwei stabilen, durch Scharniere miteinander verbundenen Halbschalen besteht und deren Verschluß durch eine Trageschiene gebildet wird, in die die freien Längsränder der Halbschalen dicht eingeführt sind. Die Trageschiene ist mit Hängevorrichtungen zum Einhängen an ein Tragseil versehen. Außerdem sind dort die Einführungsbereiche fest an den Halbschslen angeformt, wobei die Einführung der Kabel mittels angepaßter Adaptereinsätze erfolgt.

So liegt der vorliegenden Erfindung die Aufgabe zugrunde, eine Luftmuffe in Leichtbauweise zu schaffen, bei der von der Umhüllung die notwendigen Schutzfunktionen völlig erfüllt werden, wobei jedoch die mechanischen Erfordernisse bezüglich Gewicht, der Zug- und Druckkräfte auf spezielle andere Muffenteile übertragen werden. Die gestellte Aufgabe wird nun gemäß der Erfindung mit einer Luftmuffe der eingangs erläuterten Art dadurch gelöst, daß das Muffenrohr aus einer nicht selbst tragfähigen, flexiblen und längsgeschlitzten Umhüllung besteht, daß die Umhüllung entlang der Längsränder Versteifungen aufweist, daß zumindest an den Stirnseiten der Muffe Stützelemente für die flexible Umhüllung angeordnet sind, daß als stirnseitige Einführungsbereiche Muffenköpfe angeordnet sind, daß die Trageschiene als Kammerprofilteil ausgebildet ist, wobei an jeder Längsseite eine längs verlaufende, durch jeweils zwei abstehende Flächen gebildete, schlitzförmige Nut zur Aufnahme des jeweiligen Längsrandes der Umhüllung angeordnet ist und daß die Tragschiene eine mittlere, zwischen den beiden schlitzförmigen Nuten befindliche Kammer einer Profilierung zur Aufnahme einer Verankerung für die Hängevorrichtung aufweist.

So ist nun die Grundidee für eine in Leichtbauweise ausgeführte Luftmuffe gemäß der Erfindung darin zu sehen, daß das Gewicht des Kabels und des Spleißes und die sonst zusätzlich auftretenden Kräfte nicht auf den Muffenkörper einwirken, so daß der Muffenkörper selbst gewissermaßen "schwimmend" über der Verbindungsstelle angebracht wird und praktisch nur sein Eigengewicht zu tragen hat. Dabei lassen sich bei einer derartigen Grundidee alle gebräuchlichen Arten von Muffen ersetzen, wie zum Beispiel Durchgangs- und Verzweigungsmuffen mit oder ohne zusätzlich anzubringenden Terminalgehäusen. Dabei ergibt eine derartige Leichtbauweise trotzdem eine hohe mechanische Stabilität, wobei für alle Muffengrößen das gleiche einheitliche Konstruktionsprinzip zugrunde liegt. So ergibt sich dadurch gewissermaßen auch ein Baukastensystem für den Ausbau von einer einfachen Verbindungsmuffe zur "Terminalmuffe". Weiterhin ergibt sich hierbei eine leichte und ablaufrichtige Montage ohne Verwendung von Spezialwerkzeugen. Zusätzlich läßt sich eine Schirmdurchverbindung anbringen. Von Vorteil ist auch, daß sich eine ausreichende Zugabfangung aller eingeführten Kabel herstellen läßt. Nicht zuletzt ist vorteilhaft, daß eine einfache Anpassung an die jeweilige Montagesituation durch entsprechende Verlängerungseinheiten durchgeführt werden kann. Diese Vorteile werden im wesentlichen dadurch erreicht, daß die erfindungsgemäße Luftmuffe aus drei Funktionsteilen gebildet wird und zwar erstens aus einer Trageschiene, die mit Verschlußprofilen versehen ist, zweitens aus einem einteiligen, geschlitzten Muffenrohr und drittens aus den Verschlußkörpern an den beiden Enden des Muffenrohres. Durch diese Trennung in Funktionseinheiten lassen sich die jeweiligen Einzelaufgaben optimieren.

Die Erfindung wird nun anhand von neunzehn Figuren näher erläutert.
- Figur 1: zeigt die Prinzipeinheiten der Luftmuffe.
- Figur 2: zeigt ein rohrförmiges Terminalgehäuse.
- Figur 3: zeigt ein kastenförmiges Terminalgehäuse.
- Figur 4: zeigt den Aufbau der Tragschiene mit einer Hängevorrichtung.
- Figur 5: zeigt den Querschnitt durch die Trageschiene.
- Figur 6: zeigt Einzelteile der Hängevorrichtung mit einer Kabelklemme.
- Figur 7: zeigt die Kabelklemme.
- Figur 8: zeigt die gesamte Trageeinheit.
- Figur 9: zeigt eine Übersicht über den Einführungsbereich der Luftmuffe.
- Figur 10: zeigt ein Muffenrohr.
- Figur 11: zeigt eine Einzelheit im Schlitzbereich des Muffenrohres nach Figur 10.
- Figur 12: zeigt eine Anschlußmöglichkeit für den Anschluß eines Terminalgehäuses.
- Figur 13: zeigt einen Muffenkopf mit drei Einführungsstützen.
- Figur 14: zeigt den Querschnitt eines Muffenkopfes nach Figur 13.
- Figur 15: zeigt ein Verlängerungsset für die Luftmuffe.
- Figur 16: zeigt ein erstes Beispiel für einen folienartigen Aufbau der Umhüllung.
- Figur 17: zeigt ein zweites Beispiel für einen folienartigen Aufbau der Umhüllung.
- Figur 18: zeigt ein drittes Beispiel für einen folienartigen Aufbau der Umhüllung.
- Figur 19: zeigt ein viertes Beispiel für einen folienartigen Aufbau der Umhüllung.

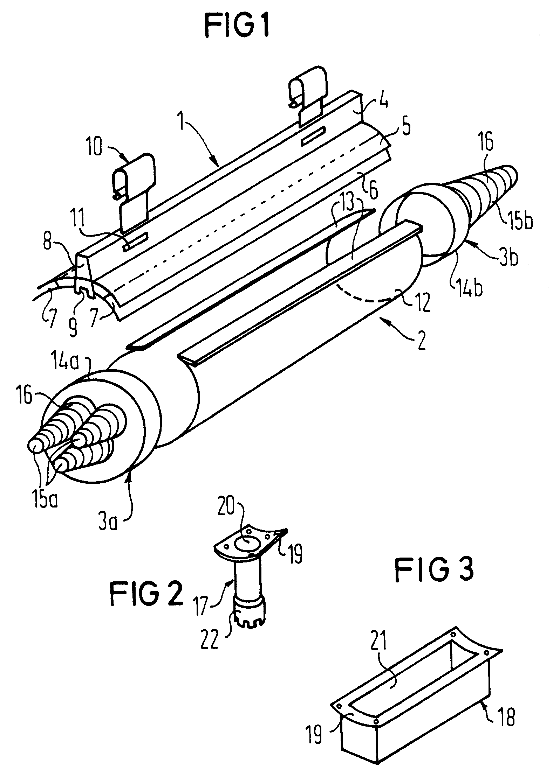

In Figur 1 sind die einzelnen Funktionsteile, nämlich die Trageschiene 1, das Muffenrohr 2 und die Muffenköpfe 3a, 3b der erfindungsgemäßen Luftmuffe dargestellt. So ist erkennbar, daß die Trageschiene 1 mit Hängevorrichtungen 10 zum Anhängen an ein Tragseil versehen ist und gleichzeitig als Verschlußelement mit längsverlaufenden Nuten 7, die jeweils von einer oberen und unteren Fläche 5 und 6 des Kammerprofils begrenzt sind, ausgebildet ist. In diese Nuten 7 werden beim Verschließen der Luftmuffe die beiden verdickten bzw. profilierten Längsränder 13 der Umhüllung 12 eingeführt und mit Hilfe von Spannbändern, die die Umhüllung 12 umfassen und durch Schlitze 11 der Trageschiene 1 geführt sind, dichtend eingepreßt. Dies erfolgt in Muffenbereichen, die im inneren Stützkörper als Gegenlager enthalten. Als solche Stützkörper können zum Beispiel bei entsprechend steifer Gestaltung auch die zylindrischen Teile 14a und 14b der Muffenköpfe 3a und 3b dienen. Die Muffenköpfe 3a und 3b besitzen je nach Einführungsfall einen oder mehrere konische Kabeleinführungsstutzen 15a und 15b, die mit Durchmessermarkierungen 16 versehen sind. Die Trageschiene 1 ist als Mehrkammerprofil ausgebildet, wobei in der Kammer 8 des Profils 4 im Bereich der durchgeführten Hängevorrichtungen 10 jeweils ein Vergußblock vorzugsweise aus einem aushärtenden Harz zur Fixierung dieser Hängevorrichtungen 10 eingebracht wird.

Die Figur 2 zeigt einen zylindrischen Behälter 20, der als Terminalgehäuse 17 über einen Flansch 19 zum Beispiel mittels Schrauben an das Muffenrohr 2 ansetzbar ist. Über einen entsprechenden Abschluß 22 ist dieser zusätzliche Aufnahmeraum zugänglich.

Die Figur 3 zeigt eine mehr rechteckförmige Ausgestaltung 21 mit einem Flansch 19, der ebenfalls als Terminalgehäuse bei Bedarf nachträglich angesetzt werden kann.

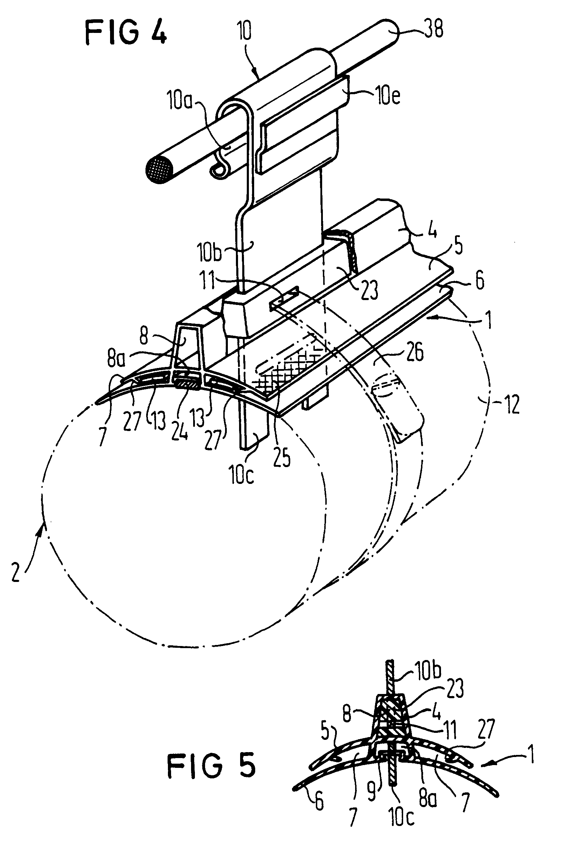

In Figur 4 werden die Einzelheiten eines Einsatzes der Hängevorrichtung 10 in der Tragschiene 1 gezeigt. So wird deutlich, daß die Hängevorrichtung 10 im wesentlichen aus einem Band besteht, dessen oberes Ende 10a U-förmig abgebogen ist zum Anhängen an das Tragseil 38. An diesem Ende 10a ist ein Einhängeflansch 10e für einen Schnellverschlußbügel angeordnet. Das Bandteil 10b wird dann in das Profilteil 4 der Tragschiene 1 bis ins Muffeninnere eingeführt. Das Profilteil 4 ist hohl als Kammer 8 ausgebildet und wird im Bereich der Einführung der Hängevorrichtung 10 mit einem Vergußblock 23 aus Gießharz ausgefüllt, so daß die Hängevorrichtung 10 auf diese Weise darin verankert ist. Der Schlitz 11 dient der Durchführung eines Spannbandes 26, das das Muffenrohr 2 umfaßt. Aus dieser Figur wird auch die Einführung der Längsränder 13 der Umhüllung 12 in die beiden Nuten 7 der Tragschiene 1 deutlich. Diese Nuten 7 werden durch die beiden Flächen 5 und 6 des Kammerprofilaufbaues der Tragschiene 1 gebildet. Die obere Fläche 5 ist stärker nach einwärts gebogen und jeweils mit einer Verhakung 27 versehen, die ein Abgleiten des bereits eingeführten Muffenrohres 2 verhindert. Außerdem kann diese Fläche 5 auch mit einem klebenden und eventuell auch dichtenden Material 25 belegt werden. Außerdem weist die Tragschiene 1 eine längsverlaufende und hinterschnittene Mittelnut 9 auf, in die beispielsweise eine Erddurchverbindungsschiene 24 eingeklemmt werden kann.

Aus dem Querschnitt der Figur 5 wird das Kammerprofil der Tragschiene 1 ersichtlich. Die beiden Nuten 7 zur Aufnahme der Umhüllung 12 mit ihren Längsrändern 13 sind symmetrisch zueinander durch die Flächen 5 und 6 gebildet. Dabei ist die obere Fläche 5 mit einer Verhakung 27 versehen, durch die verhindert wird, daß die bereits eingeführten Längsränder 13 wieder aus der Nut 7 rutschen. Weiterhin wird deutlich, daß die Hängevorrichtung 10 mit ihrem Mittelteil 10b in einem Vergußblock 23, der in der Kammer 8 eingebracht wurde, verankert ist. Der Schlitz 11 dient der Durchführung eines Spannbandes zur Sicherung und zum Verschluß der Umhüllung 12. Das Ende 10c der Hängevorrichtung 10 endet im Inneren der Luftmuffe. Das Kammerprofil der Tragschiene 1 wird beispielsweise im Strangpreßverfahren hergestellt und dann dem jeweiligen Produkttyp auf entsprechende Größe zugeschnitten und mit den Schlitzen für die verschiedenen Durchführungen versehen. Das zweckmäßigste Profil enthält zwei, durch leicht schräg gestellte Seitenwände geschlossene, mittlere Kammern 8 und 8a, denen sich zu beiden Seiten je zwei als Nuten 7 ausgebildete Kammern anschließen. Nach auswärts ist der Abschluß mit zwei federnden Verhakungen 27 versehen, die an die oberen Flächen 5 angeformt sind. Die untere Fläche 6 besitzt im mittleren Bereich der Kammer 8a eine vorzugsweise hinterschnittene Einbuchtung, in die ein Flächenleiter als Erdschiene eingeschnappt werden kann. Die Hängevorrichtung 10 wird in die mittlere Kammer 8 mittels Schmelzkleber, Gießharz oder ähnlichem im Bereich der Durchführung vergossen. durch den Hinterschnitt der schräg gestellten Kammerwände kann der Vergußblock 23 nicht aus dem Profil gezogen werden. Die äußeren Bereiche der Flächen 5 und 6 dienen einmal als Gleitflächen für das einzuführende Muffenrohr und zum anderen wird durch eine selbstklebende Beschichtung der Innenseite der oberen Flächen 5 und entsprechender Partien des Muffenrohres eine spritzwasserdichte Verklebung erzielt. Die stirnseitige Abdichtung des Kammerprofils gegen Spritzwasser wird durch an den Enden eingebrachtes, dauerplastisches Material bewerkstelligt.

Durch Kombination zweier thermoplastischer Materialien oder deren Varianten in glasfasergefüllter und ungefüllter Ausführung wird erreicht, daß das Profil im Bereich der mittleren Kammer biegesteif und zugfest ausgebildet ist, die Ränder und Außenstege dagegen flexibel bei hoher Zähigkeit bleiben. Als Werkstoff kommen copolymermodifizierte Polycarbonate, Polyamide und Polyethylene in Frage, die mit oder ohne Glasfaserfüllung in Tandem-Extrusion verarbeitet werden. Über die vorstehend angegebene Materialkombination wird erreicht, daß sich ein und dasselbe Profil in seiner Krümmung Muffenrohren bzw. Verschlußkörpern unterschiedlicher Durchmesser über weite Bereiche anpaßt. Für den Gesamtbereich der Muffendurchmesser von ca. 40 bis 240 m werden dabei nur zwei Profilgrößen benötigt. Eine mögliche Demontage des Muffenrohres erfolgt nach Entfernen der Verschlußbänder durch Anheben der flexibel gestalteten Randzonen der oberen Flächen 5 der Verschlußschiene 1.

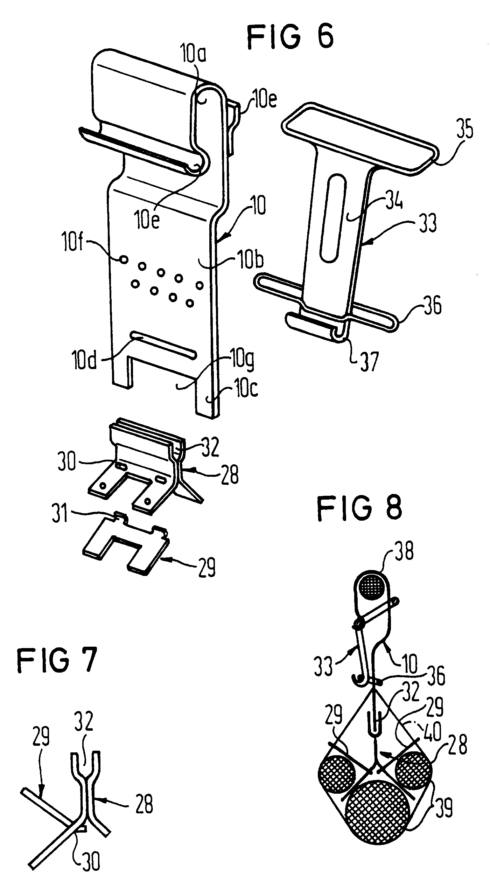

Die Figur 6 zeigt den Hauptteil der Hängevorrichtung 10 mit dem U-förmig gebogenen Ende 10a für die Aufnahme des Tragseils und zwei Einhängelaschen 10e für den Schnellverschlußbügel 33, der mit seinem Ringteil 35 dort eingehängt wird. Mit Hilfe einer Arretierungsöse 36 erfolgt die Sicherung der Hängevorrichtung 10 am Tragseil. Das Mittelteil 10b besitzt Durchbrüche 10f, die beim Vergießen im Vergußblock dazu dienen, daß eine sichere Verankerung in der Tragschiene 1 erfolgt. Weiterhin ist der Durchführungsschlitz 10d für das Spannband ersichtlich und am unteren Ende 10c befindet sich ein Ausschnitt 10g, in den eine Kabelklemme 28 eingefügt werden kann. Diese Kabelklemme 28 hat eine im wesentlichen V-förmige Spreizung, in welche ein Kabel eingeführt und mit Hilfe eines Spannbandes in dieser Lage fixiert werden kann. Mit Zusatzplatten 29, die in Schlitze 30 der Kabelklemme 28 eingesetzt werden können, läßt sich die Anzahl der aufzunehmenden Kabel erhöhen.

Die Figur 7 zeigt in einer seitlichen Ansicht die Ausgestaltung der mit Zusatzplatte 29 erweiterten Kabelklemme 28, die mit einer oberen Nut 32 in den vorher bereits genannten Ausschnitt 10g der Hängevorrichtung 10 eingefügt werden kann.

Die Figur 8 zeigt nun das Prinzip der Kabelfixierung und Aufhängung am Tragseil 38. Daraus wird besonders deutlich, daß das Muffenrohr für diesen Zweck überhaupt nicht mehr maßgebend ist und somit nur dem Zwecke des Schutzes dient. Es geht hervor, daß mit der Hängevorrichtung 10 die Probleme der Aufhängung und Festlegung der Kabel in der Luftmuffe bewerkstelligt werden. Die Hängevorrichtung 10 wird, wie bereits erläutert, am Kabel 38 eingehängt und mit dem Schnellverschlußbügel 33 daran gesichert. Im Inneren der Luftmuffe wird an das untere Ende im ausgesparten Bereich 10g der Hängevorrichtung 10 die Kabelklemme 28 mit ihren Zusatzplatten 29 über die Nut 32 eingefügt. In den dadurch entstandenen V-förmigen Führungen sind die einzelnen Kabel 39 eingeführt und mit Hilfe eines Spannbandes 40 fixiert. Dieses Spannband 40 dient jedoch gleichzeitig der Fixierung der Kabelklemme 28 an der Hängevorrichtung 10, das durch den dort befindlichen Schlitz 10d geführt und dann verspannt ist. Auf diese Weise ist ein stabiles Hängesystem gegeben, mit dem die Trage- und Festlegeprobleme der einzelnen Teile unabhängig vom Muffenrohr gelöst sind.

Die Innenseiten der V-förmigen Kabelklemme 28 und der Einsteckplatten 29 sind mit Kerbungen oder Verzahnungen versehen, die sich bei der Montage unter dem Schließdruck des Spannbandes in den Kabelmantel eindrücken. Zur Erhöhung des Formschlusses werden an den Stellen, an denen der Kabelmantel die verzahnten Flächen der Kabelklemme 28 oder der Einsteckplatten 29 nicht berührt, auf den Kabelbinder zusätzlich verzahnte Fixierelemente aufgesetzt. Durch die rechteckige Aussparung der Kabelklemme 28 bzw. Einsteckplatten 29 wird gleichzeitig erreicht, daß auch kleine Kabeldurchmesser ausreichend vom Spannband umschlungen werden. Die Kabelklemme 28 ihrerseits erhält eine axial unverrückbare Führung im Ausschnitt 10g der Hängevorrichtung. Die Mittellage der Kabel kann in begrenztem Maße durch Beilegen von Distanzstiften variiert werden.

Das Anbringen der Hängevorrichtung am Tragseil erfolgt im ersten Montageschritt dergestalt, daß zuerst der Schnellverschlußbügel 33 über die Hängevorrichtung 10 gesteckt wird und danach das Seil gegen den Widerstand des rückfedernden, freien Schenkels in die Einhängelaschen 10e eingeführt wird. Mit dem Schnellverschlußbügel wird dann der freie Schenkel der Hängevorrichtung in Richtung auf das feststehende Teil gespannt und das Ende des Schnellverschlußbügels 33 mittels der von Hand übergeschobenen Arretierungsöse 36 festgelegt. Damit ist die Hängevorrichtung am Tragseil fixiert.

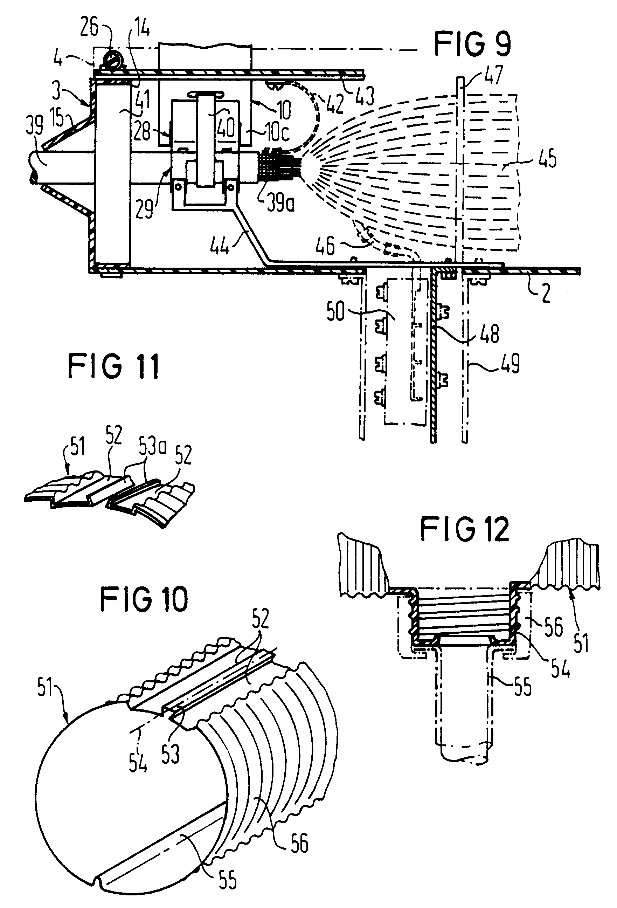

Die Figur 9 zeigt einen Teilquerschnitt durch eine Luftmuffe gemäß der Erfindung. Daraus erkennt man die Einführung eines Kabels 39 durch einen Kabeleinführungsstutzen 15 eines Muffenkopfes 3, in dessen zylindrischem Teil 14 ein separater, ringförmiger Stützkörper 41 eingelegt ist. In diesem Bereich wird dann auch jeweils das Spannband 26 über dem Muffenrohr 2 aufgezogen. Das Profil 4 der Tragschiene 1 ist hier nur angedeutet. Die Hängevorrichtung 10 ist mit ihrem Ende 10c ins Innere der Luftmuffe geführt, wo eine Kabelklemme 28 mit einer Zusatzplatte 29 angeordnet ist. In diesem V-förmigen Ausschnitt ist ein Kabel 39 eingelegt und mit dem Spannband 40, das durch den Schlitz 10d der Hängevorrichtung 10 gezogen ist, festgeklemmt. An der Zusatzplatte 29 ist beispielsweise eine gekröpfte Erdverbindungsschiene 44 angeschraubt, während am oberen Teil der Luftmuffe angedeutet ist, daß eine Erdverbindungsschiene 43 auch im Profil der Tragschiene 1 geführt werden kann. Dort ist eine Erdverbindung 42 angezeigt, die mit dem Kabelschirm 39a verbunden ist. Daran schließt sich zum Beispiel ein Kabelspleiß 45 an, aus dem ein abzweigendes Kabelbündel 46 in ein angesetztes Terminalgehäuse 49 abgeführt wird. Dieses Terminalgehäuse 49 ist zum Beispiel mittels Schraube am Muffenrohr 2 befestigt. An der Erdungsschiene 44 ist ein Befestigungswinkel 48 für einen Terminalblock 50 angesetzt. Im mittleren Bereich der Luftmuffe ist angedeutet, daß ein zusätzliches Stützelement 47 für die flexible Umhüllung vorgesehen werden kann.

Die Figur 10 zeigt ein zum Beispiel nach der Blasformtechnik hergestelltes, dünnwandiges und zylindrisches Muffenrohr 51, das seine Steifigkeit durch eine besondere Strukturierung, zum Beispiel durch eine Wellung erhält. Bei diesem Grundkörper ist entlang einer Mantellinie eine Biegerille 55 angeformt. Nach Schlitzung entlang einer Mantellinie 54 im Bereich eines angeformten Wulstes 53 läßt sich dann trotz der Wellenstruktur das Muffenrohr öffnen. Im Bereich des angeformten Wulstes 53 sind symmetrisch zur Mantellinie 54 zwei glatt verlaufende Flächen ausgebildet, die bei Einsatz in die Nuten 7 der Tragschiene 1 die Dichtflächen 52 bilden.

Die Figur 11 zeigt in einer Einzelheit die Ausbildung im Schnittbereich entlang der Mantellinie 54, wobei hier bereits die Schlitzung vorgenommen wurde. Dadurch entstehen aufgrund der hinterschnittenen Formgebung des Wulstes 53 zwei schräg gestellte Längsränder 53a, die sich nach Einführung in die Nuten 7 der Tragschiene 1 an den dort befindlichen Verhakungen 27 sperren.

Die Figur 12 erläutert, daß bei der Herstellung eines Muffenrohres 51 nach der Blasformtechnik auch Ansätze 54 mit anformen lassen, die zum Beispiel als Ansatzstutzen für Terminalgehäuse 55 dienen können. Der Anschluß erfolgt dann beispielsweise mit Hilfe einer Überwurfmutter 56, die auf ein angeformtes Gewinde aufgeschraubt wird und den Flansch des Terminalgehäuses 55 anpreßt. Ebenso wie solche Ansätze für Terminalgehäuse können auch sogar Muffenköpfe bzw. Mehrfachstutzen für Einführungen beliebiger Art mit angeformt werden.

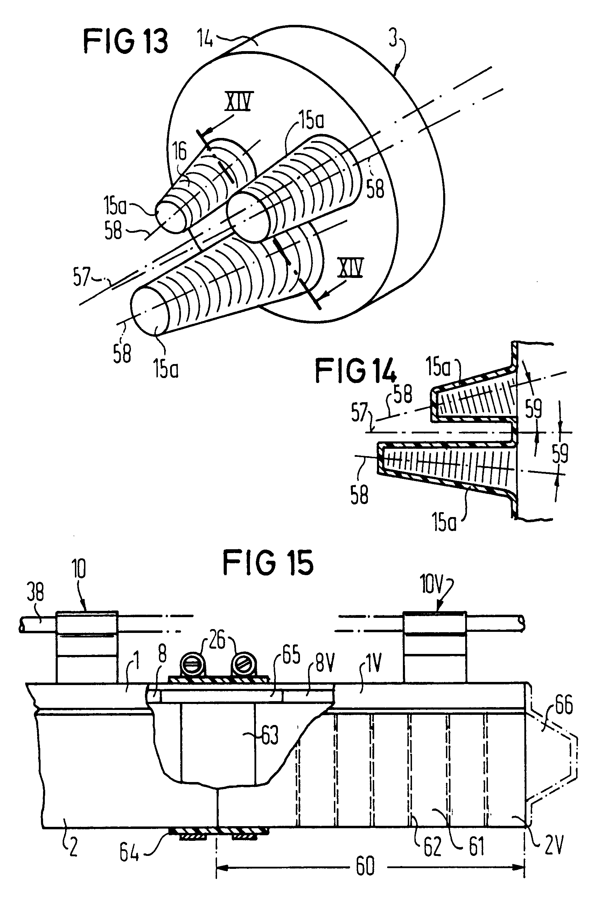

In Figur 13 wird erläutert, daß die an sich bekannten Muffenköpfe 3 dadurch verbessert werden können, daß die angeformten Kabeleinführungsstutzen 15a nicht parallel zur Hauptachse 57 der Luftmuffe, sondern unter spitzen Winkeln dazu geneigt angeordnet sind. Die Kabeleinführungsstutzen 15a sind konisch ausgebildet und mit ringförmigen Markierungen 16 für Durchmesser versehen. Um den Schließdruck des an der zylindrischen Stelle der Luftmuffe umschließenden Spannbandes abzufangen und weil beabsichtigt ist, den Muffenkopf aus einem flexiblen, schmiegsamen Material zu fertigen, wird an den kreiszylindrischen Teilen 14 der Muffenköpfe 3 jeweils ein Metall-Stützring eingebracht. Durch die Winkelneigung der Kabeleinführungsstutzen 15a wird eine zur Mittelachse 57 der Luftmuffe hin orientierte, gedrängte Anordnung erreicht.

Die Figur 14 verdeutlicht die bereits geschilderte Neigung der Kabeleinführungsstutzen 15a unter spitzen Winkeln 59 zur Hauptachse 57 der Luftmuffe in einer Schnittdarstellung.

In Figur 15 wird ein Verlängerungsset 60 gezeigt, mit dem man eine Verlängerung einer Luftmuffe durchführen kann. Dazu ist lediglich ein weiteres Stück Muffenrohr 61, ein Verlängerungsstück der Trageschiene 1V, eine zusätzliche Hängevorrichtung 10V und ein Dichtungsband 64 mit Spannbändern 26 nötig. Das Verlängerungsstück der Trageschiene 1V wird dabei mit Hilfe eines Profilstabes 65, der in die Kammer 8 des Kammerprofils der ursprünglichen Trageschiene 1 eingreift, ausgerichtet und bis zum Stoß aufgeschoben. Dann wird das Verlängerungsstück des Muffenrohres 61 dichtend wie bisher in die Nuten der Trageschiene 1V eingeführt. Der zwischen ursprünglicher Luftmuffe und angesetztem Verlängerungsteil befindliche Ringspalt wird mit einem Dichtungsband 64 überbrückt und mit Spannbändern zu beiden Seiten des Ringspaltes dichtend verspannt, wobei ein innerhalb der Luftmuffe eingelegter Stützring 63 als Gegenlager dient. Am offenen Ende des Verlängerungsstückes kann ein neuer Muffenkopf 66 in der bereits beschriebenen Weise eingesetzt werden. Auch hier sind im Inneren weitere Stützkörper 62 für die Stützung der Umhüllung vorgesehen.

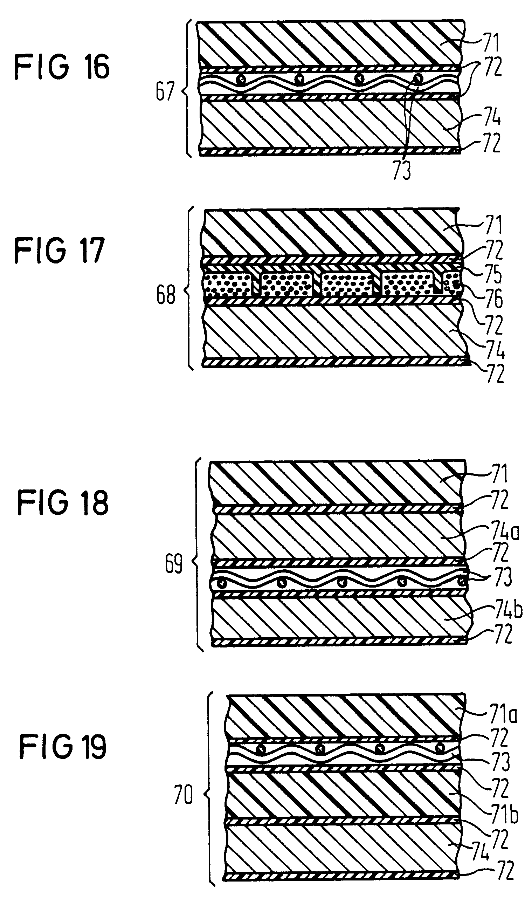

Anhand der folgenden Figuren 16 bis 19 werden nun einige Beispiele für den erfindungsgemäßen Aufbau einer als Umhüllung verwendbaren flexiblen Folie beschrieben, wobei die Aufeinanderfolge und Anzahl der einzelnen Folienschichten in beliebiger Weise variiert werden können, ohne daß das Grundprinzip verändert wird.

So zeigt die Figur 16, daß die Folie 67 aus einer Deckschicht 71 aus Polyethylen mit einer nach innen weisenden Haftschicht 72 aus einem Copolymer, einer darunter folgenden Verstärkungsschicht 73 aus vorzugsweise in Kreuz- oder Geflechtform angeordneten Glasfasern und einer allseits mit einer Haftschicht 73 aus einem Copolymer umgebenen Metallfolie 74, vorzugsweise aus Stahl, besteht. Für die jeweilige Stärke der einzelnen Schichten sind folgende Werte unter Zugrundelegung der erforderlichen Eigenschaften besonders geeignet:

| | |
|---|---|
| Deckschicht aus Kunststoff, vorzugsweise Polyethylen: | ≦ 200 µm, vorzugsweise 150 µm |
| Haftschichten aus einem Copolymer, vorzugsweise Polyethylenacrylsäureester | ≦ 50 µm, vorzugsweise 30 µm |
| Verstärkerschicht, vorzugsweise aus Glasfasern: | ≦ 150 µm, vorzugsweise 120 µm |
| Metallfolie, vorzugsweise aus Stahl: | ≦ 200 µm, vorzugsweise 150 µm |

Diese Werte gelten für alle weiteren angegebenen Ausführungsbeispiele.

Die Figur 17 zeigt ein zweites Ausführungsbeispiel für eine flexible Folie 68, bei der die Verstärkungsschicht durch ein Hohlraumprofil 75 mit einer Stärke von ca. 300 µm gebildet wird. Die einzelnen Hohlkammern dieses Hohlkammerprofils 75 sind mit einem Dichtungsmaterial 76 vorzugsweise einer Bitumendichtmasse ausgefüllt. Diese Ausführungsform hat den Vorteil, daß bei einer Stich- oder Schnittverletzung der als Umhüllung eingesetzten Folie 68 eine gewisse "Selbstheilung" eintritt, da das Dichtungsmaterial 76 die Verletzung dichtend ausfüllt und abschließt. Im übrigen sind die bereits beschriebenen Schichten vorgesehen.

In Figur 18 wird neben den bereits in Figur 16 beschriebenen Schichten eine weitere Metallfolie 74a vorzugsweise ebenfalls aus Stahl, unterhalb der mit dem Copolymer beschichteten Deckfolie 71 eingebracht. Durch diese beiden eingelagerten Metallschichten 74a und 74b wird somit die mechanische Festigkeit erhöht , wobei die Flexibilität weitgehend erhalten bleibt.

In Figur 19 wird zusätzlich zu den in Figur 16 bereits beschriebenen Schichten eine weitere Kunststoffschicht 71b vorzugsweise aus Polyethylen, zwischen der Verstärkungsschicht 73 und der Copolymerschicht 72 der Metallfolie 74 eingelagert.

Im übrigen kann die Aufeinanderfolge der einzelnen Schichten wie auch das Material der einzelnen Schichten entsprechend den Erfordernissen abgeändert werden. Die in den Figuren 16 bis 19 beschriebenen flexiblen Folien können in einfacher und durchaus üblicher Verfahrensweise als Halbzeug für Kabelmuffen hergestellt werden, die dann durch entsprechende Konfektionierung in der bereits oben erläuterten Weise zur Kabelmuffe gestaltet werden.

## Patentansprüche

1. Längsgeteilte Luftmuffe, bestehend aus einem Muffenrohr (2) und zwei stirnseitigen Einführungsbereichen (3) und aus Hängevorrichtungen (10) zum Anhängen an ein Tragseil (38), wobei die Längsränder in längsverlaufenden Verschlußprofilen (7) einer Trageschiene (1) dichtend gefaßt sind, diese Trageschiene (1) als formstabiles Trageelement zur Aufnahme des Gewichts der Muffen- und Spleißteile ausgebildet ist, und die Hängevorrichtung (10) zum Anhängen an das Tragseil (38) an der Trageschiene (1) angeordnet ist,
**dadurch gekennzeichnet,**
daß das Muffenrohr (2) aus einer nicht selbst tragfähigen, flexiblen und längsgeschlitzten Umhüllung (12) besteht, daß die Umhüllung (12) entlang der Längsränder Versteifungen (13) aufweist, daß zumindest an den Stirnseiten der Muffe Stützelemente (41, 47, 62, 63) für die flexible Umhüllung (12) angeordnet sind, daß als stirnseitige Einführungsbereiche Muffenköpfe angeordnet sind, daß die Tragschiene (1) als Kammerprofilteil ausgebildet ist, wobei an jeder Längsseite eine längsverlaufende, durch jeweils zwei abstehende Flächen (5, 6) gebildete, schlitzförmige Nut (7) zur Aufnahme des jeweiligen Längsrandes (13) der Umhüllung (12) angeordnet ist und daß die Tragschiene (1) eine mittlere, zwischen den beiden schlitzförmigen Nuten (7) befindliche Kammer (8) einer Profilierung (4) zur Aufnahme einer Verankerung (23) für die Hängevorrichtung (10) aufweist.

2. Längsgeteilte Luftmuffe nach Anspruch 1,
**dadurch gekennzeichnet,**
daß Muffenköpfe (3a, 3b) mit konischen Kabeleinführungsstutzen (15a, 15b) an den Stirnseiten der Muffe angeordnet sind, wobei die Achsen (58) der Kabeleinführungsstutzen (15a, 15b) vorzugsweise unter spitzen Winkeln (59) zur Muffenhauptachse (57) hin ausgerichtet sind.

3. Längsgeteilte Luftmuffe nach Anspruch 2,
**dadurch gekennzeichnet,**
daß die Kabeleinführungsstutzen (15a, 15b) schrumpfbar sind.

4. Längsgeteilte Kabelmuffe nach einem der vorhergehenden Ansprüche,
**dadurch gekennzeichnet,**
daß die Ränder (14a, 14b) der Muffenköpfe (3a, 3b) als Stützkörper für das Muffenrohr (2) ausgebildet sind.

5. Längsgeteilte Luftmuffe nach einem der vorhergehenden Ansprüche,
**dadurch gekennzeichnet,**
daß jeweils ein Stützkörper (41) innerhalb der Muffenköpfe (3a, 3b) angeordnet ist.

6. Längsgeteilte Luftmuffe nach einem der vorhergehenden Ansprüche,
**dadurch gekennzeichnet,**
daß die Trageschiene (1) eine längs verlaufende Nut (9) zur fixierenden Aufnahme einer Erdungsschiene (24) aufweist.

7. Längsgeteilte Luftmuffe nach einem der vorhergehenden Ansprüche,
**dadurch gekennzeichnet,**
daß die Trageschiene (1) innerhalb der Schlitze (7) an den Nutflächen (5, 6) eine klebende, vorzugsweise selbstklebende Beschichtung (25) aufweist.

8. Längsgeteilte Luftmuffe nach einem der vorhergehenden Ansprüche,
**dadurch gekennzeichnet,**
daß die Verankerung aus einem Vergußblock (23), vorzugsweise aus einem aushärtenden Harz, gebildet ist, in dem die in die Kammer (8) eingeführte Hängevorrichtung (10) eingegossen ist.

9. Längsgeteilte Luftmuffe nach einem der vorhergehenden Ansprüche,
**dadurch gekennzeichnet,**
daß die Hängevorrichtung (10) zur Aufnahme des Tragseils (38) U-förmig abgebogen ist.

10. Längsgeteilte Luftmuffe nach Anspruch 9,
**dadurch gekennzeichnet,**
daß die Hängevorrichtung (10) einen unverlierbaren Schnellverschlußbügel (33) zur Sicherung der Lage des Tragseils aufweist.

11. Längsgeteilte Luftmuffe nach einem der Ansprüche 9 oder 10,
**dadurch gekennzeichnet,**
daß die Hängevorrichtung (10) eine ins Muffeninnere ragende Kabelklemme (28) mit vorzugsweise V-förmigen Kabelaufnahmen aufweist, wobei die Kabelklemme (28) vorzugsweise von der Hängevorrichtung (10) trennbar ist.

12. Längsgeteilte Luftmuffe nach Anspruch 11,
**dadurch gekennzeichnet,**
daß die den Kabeln zugewandten Flächen der Kabelklemme (28) griffig ausgebildet sind.

13. Längsgeteilte Luftmuffe nach Anspruch 11 oder 12,
**dadurch gekennzeichnet,**
daß eine Zusatzplatte (29) an die Kabelklemme (28) ansteckbar ist.

14. Längsgeteilte Luftmuffe nach einem der Ansprüche 11 bis 13,
**dadurch gekennzeichnet,**
daß die Kabelklemme (28) Aufnahmen (30) vorzugsweise Langlöcher oder Nuten, zur Fixierung von Kabelbindern (40) aufweist.

15. Längsgeteilte Luftmuffe nach einem der vorhergehenden Ansprüche,
**dadurch gekennzeichnet,**
daß die Hängevorrichtung (10) im inneren Muffenbereich einen Schlitz (10d) zur Aufnahme eines über die Kabelklemme (28) geführten Kabelbinders (40), vorzugsweise eines Spannbandes, aufweist.

16. Längsgeteilte Luftmuffe nach einem der vorhergehenden Ansprüche,
**dadurch gekennzeichnet,**
daß die Umhüllung (2) entlang ihrer Längsränder jeweils eine Verstärkung (13) aufweist.

17. Längsgeteilte Luftmuffe nach Anspruch 16,
**dadurch gekennzeichnet,**
daß die Verstärkung (13) durch Querschnittsverdickung gebildet ist.

18. Längsgeteilte Luftmuffe nach Anspruch 16,
**dadurch gekennzeichnet,**
daß die Verstärkung (13) durch Rückbiegung der Längsränder (53a) gebildet ist.

19. Längsgeteilte Luftmuffe nach einem der Ansprüche 16 bis 18,
**dadurch gekennzeichnet,**
daß Verhakungen (27) innerhalb der schlitzförmigen Nuten (7) der Tragschiene (1) an mindestens einer der Nutflächen (5, 6) angeordnet sind.

20. Längsgeteilte Luftmuffe nach einem der vorhergehenden Ansprüche,
**dadurch gekennzeichnet,**
daß Fixierbänder (26) insbesondere nach dem Schlauchklemmenprinzip gebaute Spannbänder, die Umhüllung (2) umfassend in Führungen (11) der Tragschiene (1) eingezogen sind, wobei in dieser Position im Inneren der Luftmuffe jeweils Stützkörper (41, 62, 63) angeordnet sind.

21. Längsgeteilte Luftmuffe nach einem der vorhergehenden Ansprüche,
**dadurch gekennzeichnet,**
daß quer zur Hauptmuffenachse (57) zusätzliche Terminalgehäuse (17, 18, 49), vorzugsweise mittels Schraubelementen, ansetzbar sind.

22. Längsgeteilte Luftmuffe nach Anspruch 21,
**dadurch gekennzeichnet,**
daß Aufnahmeleisten (48) für elektrische Anschlußeinheiten (50) in den Terminalgehäusen (17, 18, 49) angeordnet sind, die mit der im Inneren der Luftmuffe befindlichen Erdungsschiene (44) verbunden sind.

23. Längsgeteilte Luftmuffe nach einem der vorhergehenden Ansprüche,
**dadurch gekennzeichnet,**
daß ein Muffenkopf (3a, 3b) durch ein Muffenverlängerungsset (60) ersetzbar ist.

24. Längsgeteilte Luftmuffe nach Anspruch 23,
**dadurch gekennzeichnet,**
daß das Muffenverlängerungsset (60) aus einem Muffenrohrstück (2V), einem Trageschienenstück (1V) mit Hängevorrichtung (10V), einem Stützring (63), einem Dichtungsband (64) und das Dichtungsband (64) umfassende Spannbänder (26), sowie aus einem in die Kammern (8, 8V) der Tragschienenteile (1, 1V) beidseits einführbarem, angepaßtem Profilstab (65) besteht.

25. Längsgeteilte Luftmuffe nach einem der vorhergehenden Ansprüche,
**dadurch gekennzeichnet,**
daß die Umhüllung (12) aus einem dünnwandigen, zylindrischen, vorzugsweise nach dem Verfahren der Kunststoff-Blasformtechnik hergestellten Muffenrohr (51) besteht, das versteifende Profilierungen (56), sowie einen Längsschlitz (54) aufweist.

26. Längsgeteilte Luftmuffe nach Anspruch 25,
**dadurch gekennzeichnet,**
daß das Muffenrohr (51) eine umlaufende Querwellung aufweist.

27. Längsgeteilte Luftmuffe nach Anspruch 25,
**dadurch gekennzeichnet,**
daß das Muffenrohr (51) eine Längsprofilierung aufweist.

28. Längsgeteilte Luftmuffe nach einem der Ansprüche 25 bis 27,
**dadurch gekennzeichnet,**
daß das Muffenrohr (51) mindestens eine Längsnut zur Aufnahme einer Erdungsschiene aufweist.

29. Längsgeteilte Luftmuffe nach einem der Ansprüche 25 bis 28,
**dadurch gekennzeichnet,**
daß das Muffenrohr (51) eine längsverlaufende Biegerille (55) aufweist.

30. Längsgeteilte Luftmuffe nach einem der Ansprüche 25 bis 29,
**dadurch gekennzeichnet,**
daß das Muffenrohr (51) Ausformungen (54) für den Anschluß von Terminalgehäusen (55) aufweist.

31. Längsgeteilte Luftmuffe nach einem der Ansprüche 1 bis 24,
**dadurch gekennzeichnet,**
daß die Umhüllung (12) aus einer flexiblen, mehrschichtigen Folie (67, 68, 69, 70) besteht.

32. Längsgeteilte Luftmuffe nach Anspruch 31,
**dadurch gekennzeichnet,**
daß die Folie (67) besteht aus:
a. einer Deckschicht (71) aus polymerem Kunststoff, vorzugsweise aus Polyethylen
b. einer darunter liegenden Haftschicht (72) aus einem Copolymer, vorzugsweise Polyethylenacrylsäureester
c. einer Verstärkungsschicht (73), vorzugsweise aus Glasfasern
d. einer darauf aufgebrachten, beiderseits mit einem Copolymer, (72) vorzugsweise Polyethylenacrylsäureester, beschichteten Metallfolie (74), vorzugsweise aus Stahl.

33. Längsgeteilte Luftmuffe nach Anspruch 31,
**dadurch gekennzeichnet,**
daß die Folie (68) besteht aus:
a. einer Deckschicht (71) aus polymerem Kunststoff, vorzugsweise Polyethylen
b. einer darunter liegenden Haftschicht (72) aus einem Copolymer, vorzugsweise Polyethylenacrylsäureester
c. einer Kunststoffolie, vorzugsweise aus Polyethylen die ein flächenhaftes Hohlkammerprofil (75) aufweist, wobei die Hohlkammern mit einem plastischen Dichtungsmaterial (76) vorzugsweise aus Bitumendichtmasse, gefüllt sind
d. einer darauf aufgebrachten, beidseitig mit einem Copolymer (73), vorzugsweise Polyethylenacrylsäureeseter, beschichteten Metallfolie (74), vorzugsweise aus Stahl.

34. Längsgeteilte Luftmuffe nach Anspruch 31,
**dadurch gekennzeichnet,**
daß die Folie (69) besteht aus:
a. einer Deckfolie (71) aus polymerem Kunststoff, vorzugsweise Polyethylen
b. einer darunter angeordneten, beidseitig mit einem Copolymer (72), vorzugsweise Polyethylenacrylsäureester, beschichteten ersten Metallfolie (74a), vorzugsweise aus Stahl
c. einer Verstärkungsschicht (73), vorzugsweise aus Glasfasern
d. einer weiteren beidseitig mit Copolymer (72), vorzugsweise Polyethylenacrylsäureester beschichteten zweiten Metallfolie (74b), vorzugsweise aus Stahl.

35. Längsgeteilte Luftmuffe nach Anspruch 31,
**dadurch gekennzeichnet,**
daß die Folie (70) besteht aus:
a. einer Deckschicht (71a) aus einem polymeren Kunststoff, vorzugsweise Polyethylen
b. einer darunter liegenden Haftschicht (72) aus einem Copolymer, vorzugsweise Polyethylenacrylsäureester
c. einer Verstärkungsschicht (73), vorzugsweise aus Glasfasern
d. einer zweiten Haftschicht (72) aus einem Copolymer, vorzugsweise aus Polyethylenacrylsäureester
e. einer weiteren Kunststoffschicht (71b), vorzugsweise aus Polyethylen
f. einer abschließenden, beidseitig mit Copolymer (72), vorzugsweise aus Polyethylenacrylsäureester, beschichteten Metallfolie (74), vorzugsweise aus Stahl

36. Längsgeteilte Luftmuffe nach einem der Ansprüche 31 bis 35,
**dadurch gekennzeichnet,**
daß die Verstärkungsschicht (73) aus längsverlaufenden Verstärkungselementen, vorzugsweise Glasfasern, besteht.

37. Längsgeteilte Luftmuffe nach einem der Ansprüche 31 bis 35,
**dadurch gekennzeichnet,**
daß die Verstärkungsschicht (73) aus längs- und querverlaufenden in Gitterform angeordneten Verstärkungselementen, vorzugsweise Glasfasern, besteht.

38. Längsgeteilte Luftmuffe nach einem der Ansprüche 31 bis 35,
**dadurch gekennzeichnet,**
daß die Verstärkungsschicht (73) aus einem Gewebe, vorzugsweise aus Glasfasern, besteht.

39. Längsgeteilte Luftmuffe nach einem der Ansprüche 31 bis 35,
**dadurch gekennzeichnet,**
daß die einzelnen Schichten der Folie (67, 68, 69, 70) jeweils folgende Stärken aufweisen:
Deckschicht (71) aus Kunststoff ≦ 200 µm, vorzugsweise 150 µm
Copolymerschicht (72) jeweils ≦ 50 µm, vorzugsweise 30 µm Metallfolien (74, 74a, 74b) ≦ 200 µm, vorzugsweise 150 µm Verstärkungsschicht (73) ≦ 150 µm, vorzugsweise 120 µm Schicht als Hohlkammerprofil (75) ≦ 300 µm, vorzugsweise 300 µm

## Claims

1. Longitudinally slit aerial sleeve comprising a tubular sleeve (2) and two introduction regions (3) at the ends and suspension devices (10) for suspending from a carrying cable (38), the longitudinal edges being grasped in a sealing manner in longitudinally extending locking profiles (7) of a carrying rail (1), this carrying rail (1) being formed as a dimensionally stable carrying element for receiving the weight of the sleeve parts and splice parts and the suspension device (10) for suspending from the carrying cable (38) being arranged on the carrying rail (1), characterized in that the tubular sleeve (2) comprises a flexible and longitudinally slit envelope (12) which is not itself load-bearing, in that the envelope (12) has reinforcements (13) along the longitudinal edges, in that supporting elements (41, 47, 62, 63) for the flexible envelope (12) are arranged at least on the end sides of the sleeve, in that sleeve heads are arranged as end introduction regions, in that the carrying rail (1) is formed as a chamber profile part, a longitudinally extending slit-shaped channel (7), formed by in each case two spaced-apart surfaces (5, 6), for receiving the respective longitudinal edge (13) of the envelope (12) being arranged on each longitudinal side and in that the carrying rail (1) comprises a middle chamber (8), disposed between the two slit-shaped channels (7), of a profiling (4) for receiving an anchor (23) for the suspension device (10).

2. Longitudinally slit aerial sleeve according to Claim 1, characterized in that sleeve heads (3a, 3b) are arranged with conical cable introduction connectors (15a, 15b) on the end sides of the sleeve, the axes (58) of the cable introduction connectors (15a, 15b) being aligned preferably at acute angles (59) to the principal axis (57) of the sleeve.

3. Longitudinally slit aerial sleeve according to Claim 2, characterized in that the cable introduction connectors (15a, 15b) are shrinkable.

4. Longitudinally slit aerial sleeve according to one of the preceding claims, characterized in that the edges (14a, 14b) of the sleeve heads (3a, 3b) are formed as supporting elements for the tubular sleeve (2).

5. Longitudinally slit aerial sleeve according to one of the preceding claims, characterized in that in each case one supporting element (41) is arranged within the sleeve heads (3a, 3b).

6. Longitudinally slit aerial sleeve according to one of the preceding claims, characterized in that the carrying rail (1) has a longitudinally extending channel (9) for clamping reception of a grounding rail (24).

7. Longitudinally slit aerial sleeve according to one of the preceding claims, characterized in that the carrying rail (1) has, within the slit (7) on the channel surfaces (5, 6), an adhesive, preferably self-adhesive, coating (25).

8. Longitudinally slit aerial sleeve according to one of the preceding claims, characterized in that the anchor is formed from a casting block (23), preferably from a curing resin, in which the suspension device (10) introduced into the chamber (8) is cast.

9. Longitudinally slit aerial sleeve according to one of the preceding claims, characterized in that the suspension device (10) for receiving the carrying cable (38) is bent over in a U-shaped manner.

10. Longitudinally slit aerial sleeve according to Claim 9, characterized in that the suspension device (10) has a captive rapid-action lock shackle (33) for securing the position of the carrying cable.

11. Longitudinally slit aerial sleeve according to one of Claims 9 or 10, characterized in that the suspension device (10) has a cable clamp (28) which projects into the sleeve interior and has preferably V-shaped cable-receiving devices, the cable clamp (28) being preferably detachable from the suspension device (10).

12. Longitudinally slit aerial sleeve according to Claim 11, characterized in that the surfaces of the cable clamp (28) facing the cables are formed so as to have a positive grip.

13. Longitudinally slit aerial sleeve according to Claim 11 or 12, characterized in that an auxiliary plate (29) can be plugged onto the cable clamp (28).

14. Longitudinally slit aerial sleeve according to one of Claims 11 to 13, characterized in that the cable clamp (28) has receptacles (30), preferably elongated holes or channels, for fixing cable retainers (40).

15. Longitudinally slit aerial sleeve according to one of the preceding claims, characterized in that the suspension device (10) has in the inner sleeve region a slit (10d) for receiving a cable retainer (40), preferably a strap retainer, guided over the cable clamp (28).

16. Longitudinally slit aerial sleeve according to one of the preceding claims, characterized in that the envelope (2) has along each of its longitudinal edges a reinforcement (13).

17. Longitudinally slit aerial sleeve according to Claim 16, characterized in that the reinforcement (13) is formed by a thickened cross-section.

18. Longitudinally slit aerial sleeve according to Claim 16, characterized in that the reinforcement (13) is formed by bending back the longitudinal edges (53a).

19. Longitudinally slit aerial sleeve according to one of Claims 16 to 18, characterized in that hooks (27) are arranged within the slit-shaped channels (7) of the carrying rail (1) on at least one of the channel surfaces (5, 6).

20. Longitudinally slit aerial sleeve according to one of the preceding claims, characterized in that fixing straps (26), preferably strap retainers built according to the hose-clip principle, are drawn into guides (11) of the carrying rail (1) so as to encircle the envelope (2), supporting members (41, 62, 63) being in each case arranged in the interior of the aerial sleeve in this position.

21. Longitudinally slit aerial sleeve according to one of the preceding claims, characterized in that, transversely to the principal axis (57) of the sleeve (57), additional terminal housings (17, 18, 49) can be attached, preferably by means of screw elements.

22. Longitudinally slit aerial sleeve according to Claim 21, characterized in that receiving strips (48) for electrical connection units (50) are arranged in the terminal housings (17, 18, 49), which strips are connected to the grounding rail (44) disposed in the interior of the aerial sleeve.

23. Longitudinally slit aerial sleeve according to one of the preceding claims, characterized in that a sleeve head (3a, 3b) can be replaced by a sleeve extension set (60).

24. Longitudinally slit aerial sleeve according to Claim 23, characterized in that the sleeve extension set (60) comprises a tubular sleeve piece (2V), a carrying rail piece (1V) with suspension device (10V), a supporting ring (63), a sealing band (64) and strap retainers (26) encircling the sealing band (64), and an adapted profile bar (65) which can be introduced at both sides into the chambers (8, 8V) of the carrying rail parts (1, 1V).

25. Longitudinally slit aerial sleeve according to one of the preceding claims, characterized in that the envelope (12) comprises a thin-walled, cylindrical tubular sleeve (51) preferably produced by the process of plastics blow-moulding and having stiffening profilings (56) and a longitudinal slit (53).

26. Longitudinally slit aerial sleeve according to Claim 25, characterized in that the tubular sleeve (51) has a surrounding transverse corrugation.

27. Longitudinally slit aerial sleeve according to Claim 25, characterized in that the tubular sleeve (51) has a longitudinal profiling.

28. Longitudinally slit aerial sleeve according to one of Claims 25 to 27, characterized in that the tubular sleeve (51) has at least one longitudinal channel for receiving a grounding rail.

29. Longitudinally slit aerial sleeve according to one of Claims 25 to 28, characterized in that the tubular sleeve (51) has a longitudinally extending bending groove (55).

30. Longitudinally slit aerial sleeve according to one of Claims 25 to 29, characterized in that the tubular sleeve (51) has set-offs (54) for the connection of terminal housings (55).

31. Longitudinally slit aerial sleeve according to one of Claims 1 to 24, characterized in that the envelope (12) comprises a flexible, multilayered film (67, 68, 69, 70).

32. Longitudinally slit aerial sleeve according to Claim 31, characterized in that the film (67) comprises:
a. a cover layer (71) of polymeric plastic, preferably of polyethylene
b. an adhesion layer (72) disposed below said cover layer (71) and comprising a copolymer, preferably polyethylene acrylic acid ester
c. a reinforcing layer (73), preferably of glass fibres
d. a metal foil (74), preferably of steel, applied thereon and coated on both sides with a copolymer (72), preferably polyethylene acrylic acid ester.

33. Longitudinally slit aerial sleeve according to Claim 31, characterized in that the film (68) comprises:
a. a cover layer (71) of polymeric plastic, preferably polyethylene
b. an adhesion layer (72) disposed below said cover layer (71) and comprising a copolymer, preferably polyethylene acrylic acid ester
c. a plastic film, preferably of polyethylene, which has an extensive hollow-chamber profile (75), the hollow chambers being filled with a plastic sealing material (76) preferably of bitumen sealing composition
d. a metal foil (74), preferably of steel, applied thereon and coated on both sides with a copolymer (73), preferably polyethylene acrylic acid ester.

34. Longitudinally slit aerial sleeve according to Claim 31, characterized in that the film (69) comprises:
a. a cover film (71) of polymeric plastic, preferably polyethylene
b. a first metal foil (74a), preferably of steel, arranged below said cover film (71) and coated on both sides with a copolymer (72), preferably polyethylene acrylic acid ester
c. a reinforcing layer (73), preferably of glass fibres
d. a further second metal foil (74b), preferably of steel, coated on both sides with a copolymer (72), preferably polyethylene acrylic acid ester.

35. Longitudinally slit aerial sleeve according to Claim 31, characterized in that the film (70) comprises:
a. a cover layer (71a) of a polymeric plastic, preferably polyethylene
b. an adhesion layer (72) disposed below said cover layer (71a) and comprising a copolymer, preferably polyethylene acrylic acid ester
c. a reinforcing layer (73), preferably of glass fibres
d. a second adhesion layer (72) comprising a copolymer, preferably polyethylene acrylic acid ester
e. a further plastic layer (71b), preferably of polyethylene
f. a closing metal foil (74), preferably of steel, coated on both sides with a copolymer (72), preferably of polyethylene acrylic acid ester.

36. Longitudinally slit aerial sleeve according to one of Claims 31 to 35, characterized in that the reinforcing layer (73) comprises longitudinally extending reinforcing elements, preferably glass fibres.

37. Longitudinally slit aerial sleeve according to one of Claims 31 to 35, characterized in that the reinforcing layer (73) comprises longitudinally and transversely extending reinforcing elements, preferably glass fibres, arranged in a lattice form.

38. Longitudinally slit aerial sleeve according to one of Claims 31 to 35, characterized in that the reinforcing layer (73) comprises a woven fabric, preferably glass fibres.

39. Longitudinally slit aerial sleeve according to one of Claims 31 to 35, characterized in that the individual layers of the film (67, 68, 69, 70) each have the following thicknesses:
cover layer (71) of plastic ≦ 200 µm, preferably 150 µm copolymer layer (72) in each case ≦ 50 µm, preferably 30 µm
metal foils (74, 74a, 74b) ≦ 200 µm, preferably 150 µm reinforcing layer (73) ≦ 150 µm, preferably 120 µm layer as hollow-chamber profile (75) ≦ 300 µm, preferably 300 µm.

## Revendications

1. Manchon aérien fendu longitudinalement, constitué d'un tube (2) et de deux zones d'introduction frontales (3) et de dispositifs de suspension (10) à un câble porteur (38), les bords longitudinaux étant enserrés de façon étanche dans des profilés longitudinaux de fermeture (7) d'un rail de support (1), ce rail de support (1) étant constitué sous la forme d'un élément de support de forme stable servant à supporter le poids des parties du manchon et des éléments d'épissure, et le dispositif de suspension (10) prévu pour l'accrochage au câble de support (38) étant monté sur le rail de support (1),
caractérisé par le fait
que le tube (2) du manchon est constitué d'une enveloppe (12) souple, non auto-portante et fendue longitudinalement, que l'enveloppe (12) possède des éléments de renfort (13) le long des bords longitudinaux, que des éléments d'appui (41,47, 62,63) de l'enveloppe souple (12) sont disposés au moins sur les faces frontales du manchon, que des têtes de manchon sont prévues en tant que zones frontales d'introduction, que le rail de support (1) est constitué sous la forme d'une pièce profilée à chambres, une rainure longitudinale en forme de fente (7), formée respectivement par deux surfaces saillantes (5, 6) et servant à loger le bord longitudinal respectif (13) de l'enveloppe (12) étant prévue sur chaque côté longitudinal, et que le rail de support (1) comporte un profilé (4) comportant une chambre médiane (8) située entre les deux rainures en forme de fente (7) et sert à loger un système d'ancrage (23) pour le dispositif de suspension (10).

2. Manchon aérien fendu longitudinalement suivant la revendication 1, caractérisé en ce que les têtes (3a,3b) du manchon pourvues d'embouts coniques (15a,15b) d'insertion de câbles sont disposées sur les faces frontales du manchon, les axes (58) des embouts (15a,15b) d'introduction de câbles en faisant de préférence des angles aigus (59) avec l'axe principal (57) du manchon.

3. Manchon aérien fendu longitudinalement suivant la revendication 2, caractérisé par le fait que les embouts (15a,15b) d'introduction de câbles peuvent être rétrécits.

4. Manchon aérien fendu longitudinalement suivant l'une des revendications précédentes, caractérisé par le fait que les bords (14a,14b) des têtes (3a,3b) du manchon sont constitués sous la forme de pièces d'appui pour le tube (2) du manchon.

5. Manchon aérien fendu longitudinalement suivant l'une des revendications précédentes, caractérisé par le fait qu'une pièce d'appui (40) est disposée à l'intérieur des têtes (3a,3b) du manchon.

6. Manchon aérien fendu longitudinalement suivant l'une des revendications précédentes, caractérisé par le fait que le rail de support (1) comporte une rainure longitudinale (9) servant à loger, tout en le fixant, un rail de raccordement à la terre (24).

7. Manchon aérien fendu longitudinalement suivant l'une des revendications précédentes, caractérisé par le fait que le rail de support (1) comporte, à l'intérieur des fentes (7), sur les surfaces (5,6) des rainures, un revêtement adhésif et de préférence auto-adhésif (25).

8. Manchon aérien fendu longitudinalement suivant l'une des revendications précédentes, caractérisé par le fait que l'ancrage est formé par un bloc de scellement (23), qui est de préférence enrobé en une résine thermodurcissable et dans lequel est enveloppé le dispositif de suspension (10) inséré dans la chambre (8).

9. Manchon aérien fendu longitudinalement suivant l'une des revendications précédentes, caractérisé par le fait que le dispositif de suspension (10) est replié en forme de U de manière à recevoir le câble de support (38).

10. Manchon aérien fendu longitudinalement suivant la revendication 9, caractérisé par le fait que le dispositif de suspension (10) comporte un étrier (33) imperdable de fermeture rapide servant à fixer en position le câble de support.

11. Manchon aérien fendu longitudinalement suivant l'une des revendications 9 ou 10, caractérisé par le fait que le dispositif de suspension (10) possède un serre-câble (28), qui pénètre à l'intérieur du manchon et qui comporte des logements à câbles de préférence en forme de V, le serre-câble (28) pouvant être séparé de préférence du dispositif de suspension (10).

12. Manchon aérien fendu longitudinalement suivant la revendication 11, caractérisé par le fait que les surfaces du serre-câbles (28), qui sont tournées vers les câbles, sont antidérapantes.

13. Manchon aérien fendu longitudinalement suivant la revendication 11 ou 12, caractérisé par le fait qu'une plaque supplémentaire (29) peut être enfichée sur le serrecâbles (28).

14. Manchon aérien fendu longitudinalement suivant l'une des revendications 11 à 13, caractérisé par le fait que le serre-câbles (28) comporte des évidements (30), de préférence des boutonnières ou des fentes, pour la fixation des attaches (40) des câbles.

15. Manchon aérien fendu longitudinalement suivant l'une des revendications précédentes, caractérisé par le fait que le dispositif de suspension (10) comporte, dans la zone intérieure du manchon, une fente (10d) servant à loger une attache de câble (40), de préférence un collier de fixation, qui est guidée dans le serre-câbles (28).

16. Manchon aérien fendu longitudinalement suivant l'une des revendications précédentes, caractérisé par le fait que l'enveloppe (2) possède respectivement un renforcement (13) le long de ses bords longitudinaux.

17. Manchon aérien fendu longitudinalement suivant la revendication 16, caractérisé par le fait que le renforcement (13) est formé par un épaississement de la section transversale.

18. Manchon aérien fendu longitudinalement suivant la revendication 16, caractérisé par le fait que le renforcement (13) est formé par repliage des bords longitudinaux (53a).

19. Manchon aérien fendu longitudinalement suivant l'une des revendications 16 à 18, caractérisé par le fait que des éléments d'accrochage (27) sont disposés à l'intérieur des rainures en forme de fentes (7) du rail de support (1), sur au moins l'une des surfaces (5,6) des rainures.

20. Manchon aérien fendu longitudinalement suivant l'une des revendications précédentes, caractérisé par le fait que des bandes de fixation (26), notamment des colliers de serrage agencés selon le principe des pinces pour tuyaux souples, sont insérées, de manière à enserrer l'enveloppe (2), dans des glissières (11) du rail de support (1), des pièces d'appui (41,62,63) étant disposés respectivement dans cette position à l'intérieur du manchon aérien.

21. Manchon aérien fendu longitudinalement suivant l'une des revendications précédentes, caractérisé par le fait que des boîtiers (17,18,49) supplémentaires à bornes peuvent être montés, de préférence au moyen d'éléments vissables, transversalement à l'axe principal (57) du manchon.

22. Manchon aérien fendu longitudinalement suivant la revendication 21, caractérisé par le fait que des barrettes de logement (48) pour des unités électriques de raccordement (50) sont disposées dans les boîtiers à bornes (17,18,49) raccordés au rail de raccordement à la terre (44), qui se trouve à l'intérieur du manchon aérien.

23. Manchon aérien fendu longitudinalement suivant l'une des revendications précédentes, caractérisé par le fait qu'une tête (3a,3b) du manchon peut être remplacée par un prolongateur (60) du manchon.

24. Manchon aérien fendu longitudinalement suivant la revendication 23, caractérisé par le fait que le prolongateur (60) du manchon est constitué d'un élément tubulaire (2V), d'un élément de rail de support (1V) muni d'un dispositif de suspension (10V), d'une bague d'appui (63), une bande d'étanchéité (64) et de bandes de serrage (26) enserrant la bande d'étanchéité (64), ainsi que d'un barreau profilé (65) adapté, qui peut être introduit des deux côtés dans les chambres (8,8V) des éléments (1,1V) du rail de support.

25. Manchon aérien fendu longitudinalement suivant l'une des revendications précédentes, caractérisé par le fait que l'enveloppe (12) est constituée d'un tube cylindrique à paroi mince (51), qui est fabriqué de préférence selon le procédé de la technique de moulage d'une matière plastique avec soufflage, et qui comporte des profilés de renforcement (56) ainsi qu'une fente longitudinale (54).

26. Manchon aérien fendu longitudinalement suivant la revendication 25, caractérisé par le fait que le tube (51) du manchon comporte une ondulation transversale circon-férentielle.

27. Manchon aérien fendu longitudinalement suivant la revendication 25, caractérisé par le fait que le tube (51) du manchon a un contour profilé longitudinalement.

28. Manchon aérien fendu longitudinalement suivant l'une des revendications 25 à 27, caractérisé par le fait que le tube (51) du manchon comporte au moins une rainure longitudinale servant à loger un rail de raccordement à la terre.

29. Manchon aérien fendu longitudinalement suivant l'une des revendications 25 à 28, caractérisé par le fait que le tube (51) du manchon comporte une rainure longitudinale de flexion (55).

30. Manchon aérien fendu longitudinalement suivant l'une des revendications 25 à 29, caractérisé par le fait que le tube (51) du manchon comporte des évidements (54) pour le raccordement de boîtiers à bornes (55).

31. Manchon aérien fendu longitudinalement suivant l'une des revendications 1 à 24, caractérisé par le fait que l'enveloppe (12) est constituée d'une feuille souple à couches multiples (67,68,69,70).

32. Manchon aérien fendu longitudinalement suivant la revendication 31, caractérisé par le fait que la feuille (67) est constituée d' :
a. une couche de finition (71) en une matière plastique polymére, de préférence du polyéthylène,
b. une couche adhésive (12) sous-jacente en un copolymère, de préférence en un ester d'acide polyéthylène-acrylique,
c. une couche de renfort (73), de préférence en fibres de verre,
d. une feuille métallique (74), de préférence en acier, déposée par-dessus la couche de renfort et recouverte sur les deux faces d'un copolymère (72), de préférence d'un ester de l'acide polyéthylène-acrylique.

33. Manchon aérien fendu longitudinalement suivant la revendication 31, caractérisé par le fait que la feuille (68) est constituée d' :
a. une couche de finition (71) en une matière plastique polymére, de préférence en polyéthylène,
b. une couche adhésive (12) sous-jacente en un copolymère, de préférence en un ester d'acide polyéthylène-acrylique,
c. une feuille de matière plastique, de préférence en polyéthylène, qui possède un profilé d'une certaine étendue (75) formée de chambres, ces dernières étant remplies d'une matière plastique d'étanchéité (76), de préférence d'une composition d'étanchéité en bitume,
d. une feuille métallique (64), de préférence en acier, déposée sur cette feuille de matière plastique et revêtue sur les deux faces d'un copolymère (73), de préférence un ester de l'acide polyéthylène-acrylique.

34. Manchon aérien fendu longitudinalement suivant la revendication 31, caractérisé par le fait que la feuille (69) est constituée d' :
a. une feuille de finition (71) en une matière plastique polymére, de préférence en polyéthylène,
b. une première feuille métallique (74), réalisée de préférence en acier, déposée sur la couche de renfort et recouverte sur les deux faces d'un copolymère (72), de préférence un ester de l'acide polyéthylène-acrylique,
c. une couche de renfort (73), de préférence en fibres de verre,
d. une autre seconde feuille métallique (74b), de préférence en acier, revêtue sur les deux faces d'un copolymère (72), de préférence d'un ester de l'acide polyéthylène-acrylique.

35. Manchon aérien fendu longitudinalement suivant la revendication 31, caractérisé par le fait que la feuille (70) est constituée d' :
a. une couche de finition (71a) en une matière plastique polymére, de préférence en polyéthylène,
b. une couche adhésive (72) sous-jacente formée d'un copolymère, de préférence d'un ester d'acide polyéthylène-acrylique,
c. une couche de renfort (73), de préférence en fibres de verre,
d. une seconde couche adhésive (72) en un copolymère, de préférence d'un ester de l'acide polyéthylène-acrylique,
e. une autre couche de matière plastique (71b) de préférence en polyéthylène,
f. une feuille métallique de fermeture (74), de préférence en acier, revêtue sur les deux faces d'un copolymère (72), de préférence d'un ester d'acide polyéthylène-acrylique.

36. Manchon aérien fendu longitudinalement suivant l'une des revendications 31 à 35, caractérisé par le fait que la couche de renfort (73) est constituée d'éléments longitudinaux de renforcement, de préférence des fibres de verre.

37. Manchon aérien fendu longitudinalement suivant l'une des revendications 31 à 35, caractérisé par le fait que la couche de renfort (73) est constituée par d'éléments de renforcement longitudinaux et transversaux, disposés sous la forme d'une grille, de préférence de fibres de verre.

38. Manchon aérien fendu longitudinalement suivant l'une des revendications 31 à 35, caractérisé par le fait que la couche de renfort (73) est un tissu, de préférence en fibres de verre.

39. Manchon aérien fendu longitudinalement suivant l'une des revendications 31 à 35, caractérisé par le fait que les couches (67,67,69,70) de la feuille ont respectivement les épaisseurs suivantes :
couche de revêtement (71) en matière plastique ≦ 200 µm, de préférence 150 µm,
couche de copolymère (72) respectivement ≦ 50 µm, de préférence 30 µm,
feuilles métalliques (74,74a,74b) ≦ 200 µm, de préférence 150 µm,
couche de renfort (73) ≦ 150 µm, de préférence 120 µm,
couche servant de profilé à chambres (75) ≦ 300 µm, de préférence 300 µm.
